# EUROPEAN PATENT APPLICATION

(11) **EP 3 023 950 A2**
(43) Date of publication of application: **25.05.2016**
(21) Application number: 15194947.6
(22) Date of filing: 17.11.2015
(51) Int. Cl.: G08B 13/196

(54) **MONITORING SYSTEM**

(30) Priority: 20.11.2014 JP 2014235960
(71) Applicant: Panasonic Intellectual Property Management Co., Ltd., Osaka-shi, Osaka 540-6207 (JP)
(72) Inventor: WAKEYAMA, Daisuke, Osaka, 540-6207 (JP); TSUJI, Hiroshi, Osaka, 540-6207 (JP)
(74) Representative: Eisenführ Speiser

(57) **Abstract**

In a monitoring system, when a sensor detection information is received from a sensor (human sensor), a master device transmits the sensor detection information to a smart phone, and transmits an image transmission request to a camera (indoor camera) correlated with the sensor, in which the camera transmits video data of a moving image obtained by an image capturing unit to the master device in response to the image transmission request from the master device, in which the master device initially transmits the video data of a moving image from the camera to the smart phone, and in which the smart phone displays a monitoring screen of the moving image transmitted from the master device on the display/input unit.

## Description

### [TECHNICAL FIELD]

The present invention relates to a monitoring system which performs data input and output between a mobile phone terminal and a camera.

### [BACKGROUND ART]

In the related art, as an example of a monitoring system in which data input and output are performed between a mobile phone terminal and a camera, there is a monitoring camera system which easily performs remote monitoring even from a remote location and monitors a monitoring target by using bidirectional communication of video and sound (for example, refer to Japanese Patent Unexamined Publication No. 2007-323533)

The monitoring system disclosed in Japanese Patent Unexamined Publication No. 2007-323533 includes a controller which is a monitoring server installed at an indoor distribution board in a predetermined house lot (within a house), a first camera unit which is an interphone master device installed at an entrance door, a second camera unit which is installed in a dining room, a third camera unit which is installed in a bedroom, an indoor unit which is an interphone master device installed in a living room, and one or more mobile phones present at remote places. For example, in a case where a dweller is out, when each camera unit detects an intruder, the controller switches and transmits a captured video signal and a collected audio signal to the mobile phone so as to capture the intruder.

### [SUMMARY OF THE INVENTION]

However, in the above-described configuration disclosed in Japanese Patent Unexamined Publication No. 2007-323533, since a video signal and an audio signal from each camera unit are appropriately switched and transmitted to the mobile phone so as to capture motion and sound of the intruder, a configuration of the controller is complex, and this inevitably leads to an increase in cost, and it is difficult to implement a monitoring system including the controller at low cost.

In order to solve the above-described problems, an object of the present invention is to provide a monitoring system which realizes data input and output between a mobile phone terminal and a camera without damaging user's convenience by using an existing fixed telephone which is connected to a fixed telephone network and can perform calls to other fixed telephones.

According to the present invention, there is provided a monitoring system including a sensor; a camera that includes an image capturing unit and has a call function; a master device that communicates with the camera, and is connected to a fixed telephone network so as to perform calls to other fixed telephones; and a mobile phone terminal that includes a display/input unit, performs wireless communication with the master device by using a wireless router, and is connected to other mobile phones via a mobile phone network, in which, when sensor detection information is received from the sensor, the master device transmits the sensor detection information to the mobile phone terminal and transmits an image transmission request to the camera correlated with the sensor, in which the camera transmits video data of a moving image obtained by the image capturing unit to the master device in response to the image transmission request from the master device, in which the master device initially transmits the video data of a moving image from the camera to the mobile phone terminal, and in which the mobile phone terminal displays a monitoring screen of the moving image transmitted from the master device on the display/input unit.

According to the present invention, it is possible to realize data input and output between a mobile phone terminal and a camera without damaging user's convenience by using an existing fixed telephone which is connected to a fixed telephone network and can perform calls to other fixed telephones.

### [BRIEF DESCRIPTION OF DRAWINGS]

[FIG. 1]

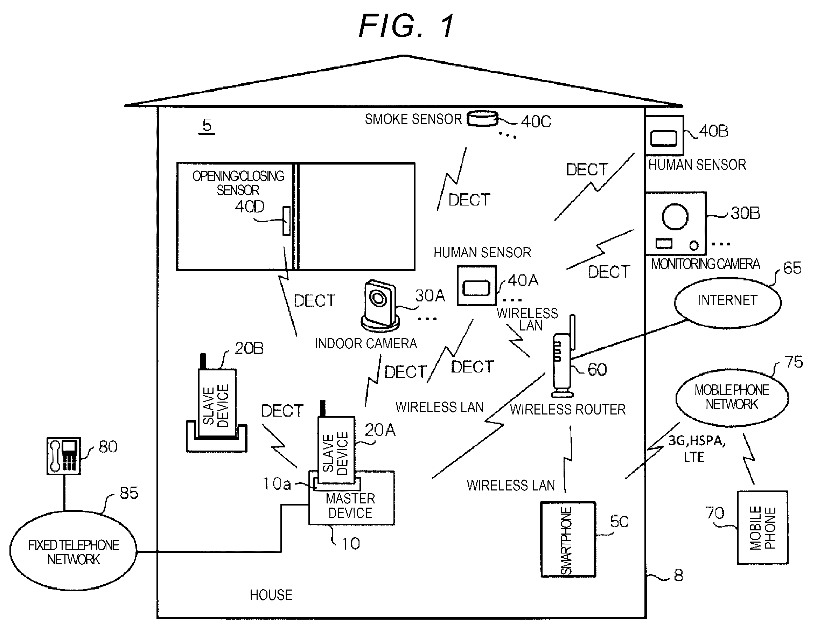

   FIG. 1 is a diagram illustrating an example of a system configuration of a monitoring camera system of the present embodiment;
[FIG. 2]

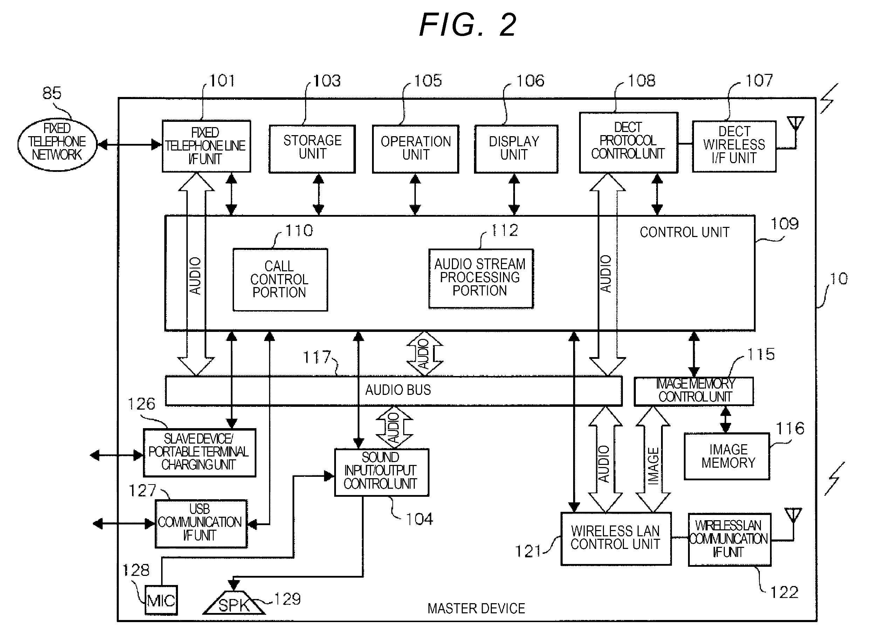

   FIG. 2 is a block diagram illustrating an example of an internal configuration of a master device;
[FIG. 3]

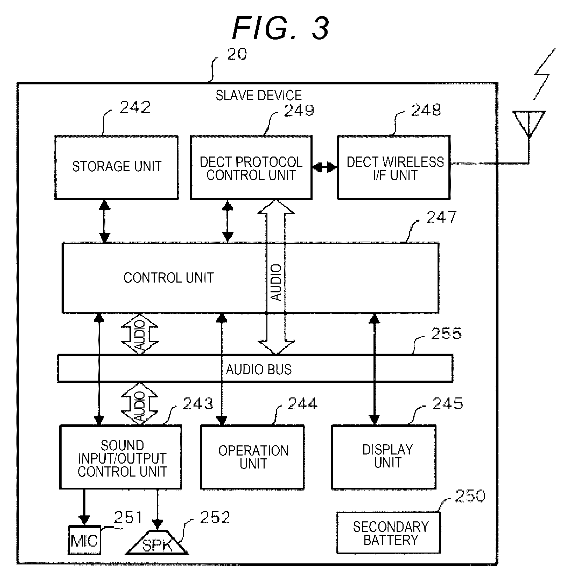

   FIG. 3 is a block diagram illustrating an example of an internal configuration of a slave device;
[FIG. 4]

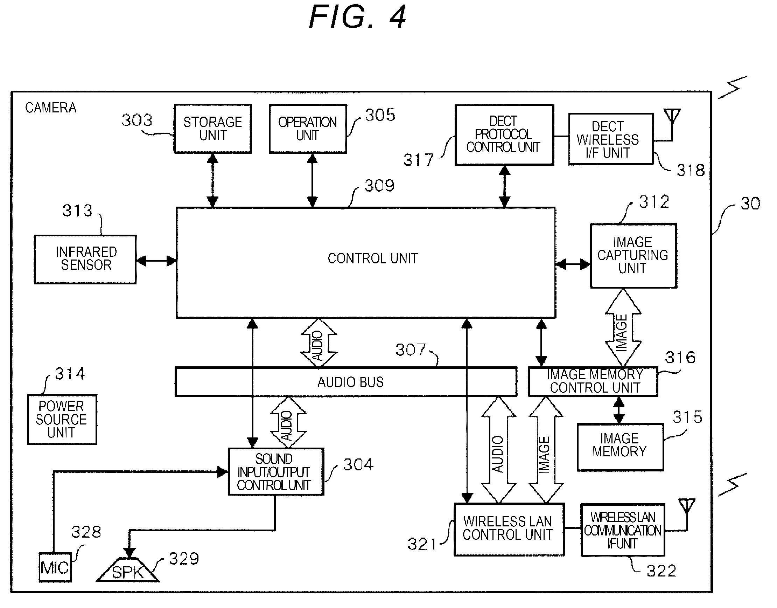

   FIG. 4 is a block diagram illustrating an example of an internal configuration of a camera;
[FIG. 5]

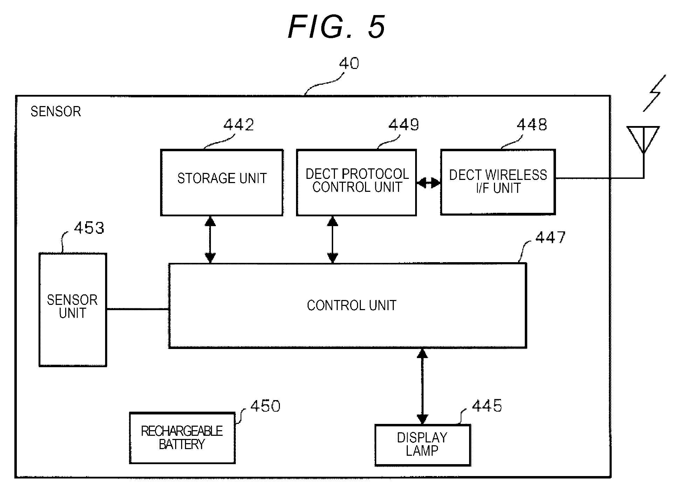

   FIG. 5 is a block diagram illustrating an example of an internal configuration of a sensor;
[FIG. 6]

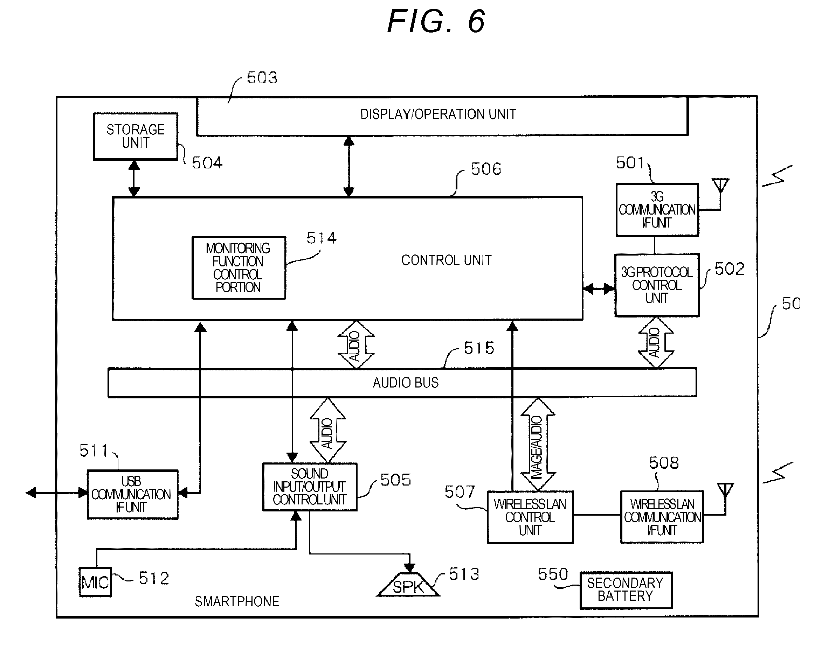

   FIG. 6 is a block diagram illustrating an example of an internal configuration of a smart phone;
[FIG. 7]

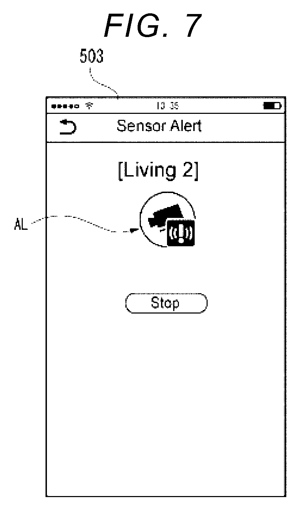

   FIG. 7 is a diagram illustrating an example of a detection information screen displayed on a display/operation unit of the smart phone;
[FIG. 8A]

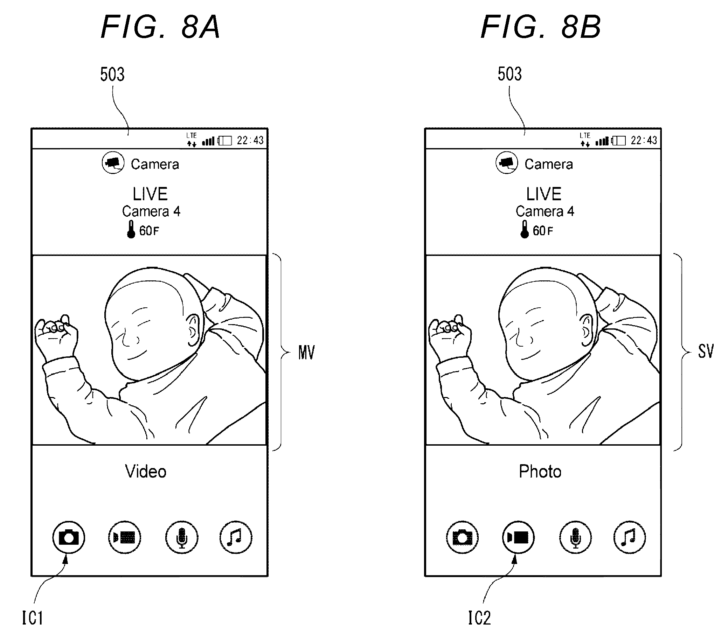

   FIG. 8A is a diagram illustrating an example of a monitoring screen of a home security application;
[FIG. 8B]
   FIG. 8B is a diagram illustrating an example of a monitoring screen of the home security application; and
[FIG. 9]

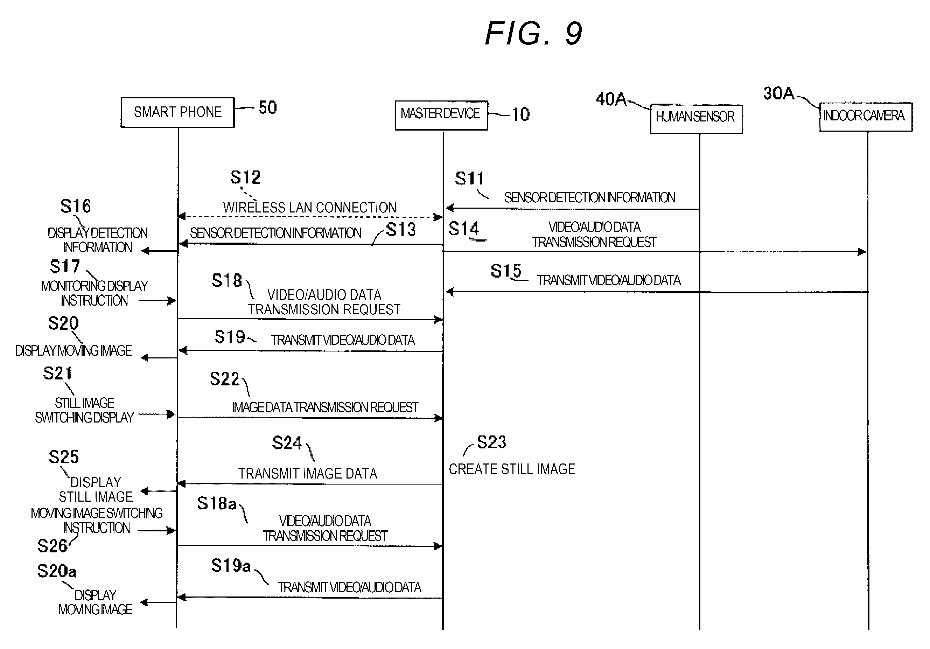

   FIG. 9 is a sequence diagram illustrating an example of an operation procedure of the monitoring camera system.

### [DESCRIPTION OF EMBODIMENT]

With reference to the drawings, a description will be made of an embodiment (hereinafter, referred to as "the present embodiment") of a monitoring camera system related to the present invention. In the following present embodiment, as an example of a monitoring camera system related to the present invention, an exemplary monitoring camera system used for home security will be described. The present invention is not limited to a monitoring camera system, and may be represented as each of devices constituting the monitoring camera system, a method for each device, and a program.

A monitoring camera system of the present embodiment includes a sensor; a camera that includes an image capturing unit and has a call function; a master device that communicates with the camera, and is connected to a fixed telephone network so as to perform calls to other fixed telephones; and a mobile phone terminal that includes a display/input unit, performs wireless communication with the master device by using a wireless router, and is connected to other mobile phones via a mobile phone network, in which, when sensor detection information is received from the sensor, the master device transmits the sensor detection information to the mobile phone terminal and transmits an image transmission request to the camera correlated with the sensor, in which the camera transmits video data of a moving image obtained by the image capturing unit in response to the image transmission request from the master device, in which the master device initially transmits the video data of a moving image from the camera to the mobile phone terminal, and in which the mobile phone terminal displays a monitoring screen of the moving image transmitted from the master device on the display/input unit.

FIG. 1 is a diagram illustrating an example of a system configuration of monitoring camera system 5 of the present embodiment. Monitoring camera system 5 is mainly provided in house 8, and includes master device 10, two cordless slave devices 20A and 20B (hereinafter, simply referred to as "slave devices"), a plurality of cameras (specifically, indoor camera 30A, monitoring camera 30B,...), various sensors (specifically, human sensors 40A and 40B, smoke sensor 40C, and an opening/closing sensor 40D), smart phone 50, and wireless router 60. A configuration of monitoring camera system 5 is only an example and may be modified in various aspects.

Master device 10 functions as a gateway in monitoring camera system 5. Master device 10 is a control device which controls the entire operation of monitoring camera system 5, and is connected to the slave devices, the cameras, the sensors, and the like in a communicable manner by using a communication method such as digital enhanced cordless telecommunications (DECT). Master device 10 is connected to the Internet 65 (network) via wireless router 60 using a wireless LAN. Master device 10 is connected to fixed telephone network 85 in a wired manner and can perform a call to fixed telephone 80. Master device 10 has a function of charging slave device 20A which is inserted into insertion port 10a.

Slave devices 20A and 20B are connected to master device 10 in the DECT communication method and can perform a call to master device 10. Particularly, in a case where two slave devices 20A and 20B are not required to be differentiated from each other, the slave devices are collectively referred to as slave device 20.

Various sensors 40 (specifically, human sensors 40A and 40B, smoke sensor 40C, opening/closing sensor 40D,...) are connected to master device 10 in the DECT communication method. Herein, as sensors, opening/closing sensor 40D which detects opening and closing of a window, smoke sensor 40C which detects smoke, and human sensors 40A and 40B which detect a person with infrared rays are used. Particularly, in a case where the sensors are not required to be differentiated from each other, the sensors are collectively referred to as sensor 40. As will be described later, infrared sensor 313 (refer to FIG. 4) built into camera 30 is also used as a human sensor.

A plurality of cameras (specifically, indoor camera 30A, monitoring camera 30B,...) have a call function and are connected to master device 10 in the DECT communication method. Herein, as cameras, monitoring camera 30B which captures an image of an outdoor environment, and indoor camera 30A which captures an image of house 8, are used. Particularly, in a case where the cameras are not required to be differentiated from each other, the cameras are collectively referred to as camera 30.

Smart phone 50 is provided as an example of a mobile phone terminal. Smart phone 50 is connected to master device 10 via wireless router 60 using a wireless LAN, and is connected to mobile phone 70 or other smart phones via mobile phone network 75 using a communication method such as the third generation (3G) method, a high speed package access (HSPA) method, or a long term evolution (LTE) method.

FIG. 2 is a block diagram illustrating an example of an internal configuration of master device 10. Master device 10 includes control unit 109, storage unit 103, operation unit 105, and display unit 106. Master device 10 receives various input operations and displays information such as image on display unit 106. Control unit 109 has call control portion 110 and audio stream processing portion 112 built thereinto, and performs call control during calling, processing of audio data, and the like.

Master device 10 includes image memory control unit 115 and image memory 116, and stores image data or the like captured by camera 30 in image memory 116.

Master device 10 includes wireless LAN control unit 121 and wireless LAN communication I/F unit 122, and transmits and receives image data and audio data to and from smart phone 50, camera 30, and the like via wireless router 60 connected over a wireless LAN.

Master device 10 includes DECT protocol control unit 108 and DECT wireless I/F unit 107, and performs wireless connection to slave device 20, sensor 40, and camera 30 by using wireless method such as digital enhanced cordless telecommunications (DECT).

Master device 10 includes audio bus 117, a sound input/output control unit 104, speaker 129, and microphone 128, and performs input and output of sound to and from an external device.

Master device 10 includes fixed telephone line I/F unit 101, and can perform a call to external fixed telephone 80 connected to fixed telephone network 85.

Master device 10 includes slave device/portable terminal charging unit 126 and charges slave device 20 or smart phone 50 inserted into insertion port 10a.

Master device 10 includes USB communication I/F unit 127, and transmits and receives data to and from an apparatus, a memory, or the like having an interface of a universal serial bus (USB) standard.

Master device 10 registers pairs of various sensors 40 and the plurality of cameras 30 in storage unit 103 in correlation with each other. For example, human sensor 40B and monitoring camera 30B are installed at close locations outdoors and are thus registered in correlation with each other. Monitoring camera 30B, as will be described later, integrally has infrared sensor 313 (refer to FIG. 4) which is a human sensor and is built thereinto, and is thus also registered in correlation with infrared sensor 313. Human sensor 40A, smoke sensor 40C, and opening/closing sensor 40D are all installed inside house 8 and are thus registered in correlation with indoor camera 30A.

FIG. 3 is a block diagram illustrating an example of an internal configuration of (cordless) slave device 20. Slave device 20 includes control unit 247, storage unit 242, operation unit 244, and display unit 245. Slave device 20 receives various input operations and displays information such as image on display unit 245.

Slave device 20 includes DECT protocol control unit 249 and DECT wireless I/F unit 248, and performs wireless connection to master device 10, sensor 40, and camera 30 by using a wireless method such as DECT.

Slave device 20 includes audio bus 255, sound input/output control unit 243, speaker 252, and microphone 251, and performs input and output of sound to and from an external device.

Slave device 20 includes secondary battery 250 which is rechargeable, and, in a case of being used as a cordless slave device, each unit of slave device 20 is supplied with power from secondary battery 250 so as to perform an operation.

FIG. 4 is a block diagram illustrating an example of an internal configuration of camera 30. Indoor camera 30A and monitoring camera 30B as examples of cameras 30 have substantially the same configuration as each other. Camera 30 includes control unit 309, storage unit 303, and operation unit 305. Camera 30 performs an operation related to image capturing and also receives input operations.

Camera 30 includes DECT protocol control unit 317 and DECT wireless I/F unit 318, and performs wireless connection to master device 10 by using a wireless method such as DECT.

Camera 30 includes wireless LAN control unit 321 and wireless LAN communication I/F unit 322, and transmits and receives image data and audio data to and from master device 10, smart phone 50, and the like via wireless router 60 connected over the wireless LAN.

Camera 30 includes audio bus 307, sound input/output control unit 304, speaker 329, and microphone 328, and performs input and output of sound to and from an external device.

Camera 30 includes image capturing unit 312, image memory control unit 316, and image memory 315, and stores image data captured by image capturing unit 312 in image memory 315. Image capturing unit 312 has a lens and an imaging element (for example, an image sensor such as a charged coupled device (CCD) or a complementary metal oxide semiconductor (CMOS)).

Camera 30 integrally has infrared sensor 313 which is a passive infrared (PIR) sensor as a human sensor built thereinto. Infrared sensor 313 detects the presence of a person by detecting a change in heat (infrared rays) generated by the person. Camera 30 includes power source unit 314 which is constituted by a commercial AC power source, and each unit of camera 30 is supplied with power from power source unit 314 so as to perform an operation.

FIG. 5 is a block diagram illustrating an example of an internal configuration of sensor 40. Sensor 40 includes control unit 447, storage unit 442, display lamp 445, and sensor unit 453. Sensor 40 performs a predetermined detection operation, such as turning on display lamp 445, in a case where a target (for example, an intruder which is also the same for the following description) is detected by sensor unit 453.

Sensor 40 includes DECT protocol control unit 449 and DECT wireless I/F unit 448, and performs wireless connection to master device 10 by using a wireless method such as DECT, and sends sensor detection information to master device 10 when a target is detected.

A sensor unit 453 differs depending on the kind of sensor 40. For example, in a case of human sensors 40A and 40B, sensor unit 453 is a PIR sensor which detects a person through a change in infrared rays. In a case of opening/closing sensor 40D which detects opening and closing of a front door, a window, or the like, sensor unit 453 is a reed switch which switches between turned-on and turned-off states due to opening and closing. In a case of smoke sensor 40C, sensor unit 453 is a light emitting/receiving unit which detects smoke when emitted light is blocked by the smoke. Sensor unit 453 may be a temperature sensor which can detect an ambient temperature.

Sensor 40 includes a secondary battery 450 which is rechargeable, and each unit of sensor 40 is supplied with power from secondary battery 450 so as to perform an operation.

FIG. 6 is a block diagram illustrating an example of an internal configuration of smart phone 50. Smart phone 50 as an example of a mobile phone terminal includes control unit 506, storage unit 504, and display/operation unit (for example, touch panel) 503. Smart phone 50 receives various input operations and displays information such as an image on display/operation unit 503. Control unit 506 includes a processor and realizes a predetermined function by the processor executing a predetermined program. Monitoring function control portion 514 which can set various functions during an operation of monitoring camera system 5, such as a function of camera 30, is built into control unit 506.

As a program for realizing monitoring function control portion 514, an application for home security (hereinafter, referred to as a "home security application") is installed in smart phone 50 and is held in storage unit 504. Display/operation unit 503 constituted by a touch panel or the like, which is a display/input unit in which a display unit and an operation unit are integrally formed, displays information such as an image or an icon on a screen and receives a tap operation (or a touch operation) which is performed on the screen by a user of smart phone 50 (hereinafter, simply referred to as a "user").

Smart phone 50 includes 3G protocol control unit 502 and 3G wireless I/F unit 501, and performs wireless connection to mobile phone 70 or other smart phones connected to mobile phone network 75, by using a third generation (3G) wireless communication method. Smart phone 50 may include a protocol control unit and a wireless I/F unit corresponding to a wireless communication method (for example, HSPA or LTE) other than the 3G method.

Smart phone 50 includes audio bus 515, sound input/output control unit 505, speaker 513, and microphone 512, and performs input and output of sound to and from an external device.

Smart phone 50 includes wireless LAN control unit 507 and wireless LAN communication I/F unit 508, and transmits and receives image data and audio data to and from master device 10, camera 30, and the like via wireless router 60 connected over the wireless LAN.

Smart phone 50 includes USB communication I/F unit 511, and transmits and receives data to and from an apparatus, a memory, or the like having an interface of a universal serial bus (USB) standard. Smart phone 50 includes secondary battery 550 which is rechargeable, and each unit of smart phone 50 is supplied with power from secondary battery 550 so as to perform an operation.

A description will be made of an operation of monitoring camera system 5 having the above-described configuration.

First, descriptions will be made of an operation of smart phone 50, display of a screen and an input operation by using display/operation unit 503 during the operation. If a state corresponding to a predetermined detection condition is detected by sensor 40 in a state in which smart phone 50 is in a standby state, when the home security application is executed, or when other applications are executed, sensor detection information of a target is displayed on display/operation unit 503 of smart phone 50.

FIG. 7 is a diagram illustrating an example of a detection information screen displayed on display/operation unit 503 of smart phone 50. A detection notification AL indicating a location, content, and the like of a target whose state corresponding to a predetermined detection condition is detected is displayed on the detection information screen. Detection notification AL of the illustrated example indicates that a predetermined detection condition state (for example, opening and closing of a door) is detected in living room 2 (Living 2) and an image of living room 2 is captured by camera 30.

If the user performs a tap operation on the icon of detection notification AL so as to perform a monitoring display instruction operation, the home security application is activated, and a monitoring screen which displays an image of a monitoring target captured by camera 30 at a location corresponding to the sensor detection information is displayed on display/operation unit 503.

FIGS. 8A and 8B are diagrams illustrating an example of a monitoring screen of the home security application displayed on display/operation unit 503 of smart phone 50. If the user performs an instruction operation for displaying a monitoring screen, such as a tap operation on detection notification AL of the detection information screen, a monitoring screen including a moving image MV illustrated in FIG. 8A is displayed. FIG. 8A illustrates an example of an image of a monitoring target captured by camera 30 (Camera4). In this state, icons for selecting functions such as still image IC1, a moving image, sound, and music are disposed on the monitoring screen of display/operation unit 503 along with the real time moving image MV of the monitoring target. At this time, the icon of still image IC1 is displayed to be emphasized and can thus be operated.

If the user performs a tap operation on the icon of still image IC1 so as to perform an instruction operation on the monitoring screen illustrated in FIG. 8A, a monitoring screen including a still image SV illustrated in FIG. 8B is displayed. In other words, an image of the target captured by camera 30 is changed from a moving image to a still image. In this state, icons for selecting functions such as a still image, moving image IC2, a sound, and music are disposed on the monitoring screen of display/operation unit 503 along with still image SV of the monitoring target. At this time, the icon of moving image IC2 is displayed to be emphasized and can thus be operated.

If the user performs a tap operation on the icon of moving image IC2 so as to perform an instruction operation on the monitoring screen illustrated in FIG. 8B, a monitoring screen including the real time moving image MV illustrated in FIG. 8A is displayed. As mentioned above, a tap operation is performed on the icons of still image IC1 and moving image IC2, and thus a display mode of a monitoring screen can be switched to moving image MV above-described still image SV.

A description will be made of an operation of master device 10 related to the above-described operation of smart phone 50. In monitoring camera system 5, if a predetermined detection condition state is detected by sensor 40, master device 10 receives sensor detection information from sensor 40 and transmits the sensor detection information to smart phone 50 so as to display a detection information screen on display/operation unit 503. In a case where a display operation of a monitoring screen is performed, master device 10 receives an instruction from smart phone 50 and transmits display screen information of a monitoring screen which will be displayed on display/operation unit 503 to smart phone 50. At this time, master device 10 transmits a video/audio data transmission request (image transmission request) to camera 30 correlated with sensor 40 from which the sensor detection information is received, and receives video data and audio data transmitted from camera 30. Master device 10 transmits the video data and the audio data acquired from camera 30 to smart phone 50. In a case where a monitoring display instruction of a still image is received from smart phone 50, master device 10 creates image information of a monitoring screen of the still image on the basis of the video data acquired from camera 30 and transmits the image information to smart phone 50.

Next, a description will be made of a flow of an operation of monitoring camera system 5. FIG. 9 is a sequence diagram illustrating an example of an operation procedure of monitoring camera system 5. Herein, a description will be made of an operation in which a target is detected by human sensor 40A, an image of a monitoring target is captured by indoor camera 30A correlated with human sensor 40A, master device 10 transmits video data transmitted from indoor camera 30A to smart phone 50, and the video data is displayed on display/operation unit 503.

If human sensor 40A detects a person present in an indoor environment, a detection signal and sensor detection information are transmitted to master device 10 (step S11). If the sensor detection information is received from human sensor 40A, master device 10 is wirelessly connected to smart phone 50 by using a wireless LAN (step S12), and transmits the sensor detection information to smart phone 50 when the connection has been completed (step S13).

Master device 10 transmits a video/audio data transmission request to indoor camera 30A (step S14). If the video/audio data transmission request is received, indoor camera 30A is connected to master device 10 by using a wireless LAN, and transmits video data of a moving image captured by image capturing unit 312 and audio data collected by microphone 328 to master device 10 (step S15).

If the sensor detection information is received from master device 10, smart phone 50 displays a detection information screen indicating detection content corresponding to the sensor detection information on display/operation unit 503 (step S16). In this state, if smart phone 50 receives an input operation of a monitoring display instruction from the user through a touch operation or the like on display/operation unit 503 of smart phone 50 (step S17), smart phone 50 transmits a video/audio data transmission request to master device 10 (step S18).

If the video/audio data transmission request is received from smart phone 50, master device 10 transmits the video data and the audio data acquired from indoor camera 30A to smart phone 50 (step S19). Smart phone 50 receives the video data and the audio data transmitted from master device 10 and displays a monitoring screen including moving image MV on display/operation unit 503 (step S20).

If a tap operation is performed on the monitoring screen by the user so as to receive an input operation of a display switching instruction to a still image in a state in which the monitoring screen including moving image MV is displayed on display/operation unit 503 (step S21), smart phone 50 transmits an image data transmission request of a still image to master device 10 (step S22). If the image data transmission request of a still image is received from smart phone 50, master device 10 creates image information of a monitoring screen of the still image by using the video data acquired from indoor camera 30A (step S23). Master device 10 transmits image data of the monitoring screen of the still image to smart phone 50 (step S24). Smart phone 50 receives the image data transmitted from master device 10, and displays a monitoring screen including still image SV on display/operation unit 503 (step S25).

If a tap operation is performed on the monitoring screen by the user so as to receive an input operation of a display switching instruction to a still image in a state in which the monitoring screen including still image SV is displayed on display/operation unit 503 (step S26), smart phone 50 transmits a video/audio data transmission request of a moving image to master device 10 (step S18a). If the video/audio data transmission request of a moving image is received from smart phone 50, master device 10 transmits the video data and the audio data acquired from indoor camera 30A to smart phone 50 (step S19a). Smart phone 50 receives the video data and the audio data transmitted from master device 10, and displays a monitoring screen including moving image MV on display/operation unit 503 (step S20a).

As mentioned above, monitoring camera system 5 of the present embodiment includes sensor 40; camera 30 which includes image capturing unit 312 and has a call function; master device 10 which performs communication with camera 30 and is connected to fixed telephone network 85 so as to perform calls to another fixed telephone 80; and smart phone 50 which has display/operation unit 503, performs wireless communication with master device 10 by using wireless router 60, and is connected to another mobile phone 70 via mobile phone network 75.

Monitoring camera system 5 of the present embodiment can implement a monitoring system which is convenient to use at low cost by using a communication function of an existing fixed telephone.

In monitoring camera system 5 of the present embodiment, if sensor detection information is received from sensor 40, master device 10 transmits the sensor detection information to smart phone 50 and transmits an image transmission request to camera 30 correlated with sensor 40; camera 30 transmits video data of a moving image acquired by image capturing unit 312 to master device 10 in response to the image transmission request from master device 10; master device 10 initially transmits the video data of the moving image from camera 30 to smart phone 50; and smart phone 50 displays a monitoring screen of the moving image transmitted from master device 10 on display/operation unit 503.

As mentioned above, in a case where a monitoring screen of a monitoring target captured by camera 30 is displayed on smart phone 50, a moving image is initially displayed, and thus it is possible to understand accurate security circumstances in a target region.

In monitoring camera system 5 of the present embodiment, if a display switching instruction to a still image is received from smart phone 50 in a state in which the monitoring screen of a moving image is displayed on display/operation unit 503 of smart phone 50, master device 10 generates image data of a still image on the basis of video data of a moving image and transmits the image data to smart phone 50, and smart phone 50 displays a monitoring screen of the still image transmitted from master device 10 on display/operation unit 503.

In monitoring camera system 5 of the present embodiment, if a display switching instruction to a moving image is received from smart phone 50 in a state in which the monitoring screen of still images is displayed on display/operation unit 503 of smart phone 50, master device 10 transmits video data of a moving image to smart phone 50.

As mentioned above, since a moving image and a still image can be arbitrarily switched through an instruction operation of smart phone 50 and thus switching between a moving image and a still image can be performed through a simple operation, it is also possible to easily handle a case where an image of a monitoring target is desired to be examined in detail. A screen can be returned from a still image to a moving image through a simple operation, and thus the present circumstances can be checked.

Although the various embodiments have been described with reference to the drawings, needless to say, the present invention is not limited to such embodiments. It is obvious that a person skilled in the art can conceive of various modifications or alterations within the scope recited in the claims, and thus it is understood that they naturally fall within the technical scope of the present invention. The respective constituent elements in the embodiment may be arbitrarily combined with each other within the scope without departing from the spirit of the present invention.

In the following, further embodiments of the present invention are indicated:
[Embodiment A]
   A monitoring system comprising:
   a sensor;
   a camera that includes an image capturing unit and has a call function;
   a master device that communicates with the camera, and is connected to a fixed telephone network so as to perform calls to other fixed telephones; and
   a mobile phone terminal that includes a display/input unit, performs wireless communication with the master device by using a wireless router, and is connected to other mobile phones via a mobile phone network,
   wherein, when sensor detection information is received from the sensor, the master device transmits the sensor detection information to the mobile phone terminal and transmits an image transmission request to the camera correlated with the sensor,
   wherein the camera transmits video data of a moving image obtained by the image capturing unit to the master device in response to the image transmission request from the master device,
   wherein the master device initially transmits the video data of a moving image from the camera to the mobile phone terminal, and
   wherein the mobile phone terminal displays a monitoring screen of the moving image transmitted from the master device on the display/input unit.
[Embodiment B]
   The monitoring system with the features of Embodiment A,
   wherein, when a display switching instruction to a still image is received from the mobile phone terminal in a state in which the monitoring screen of the moving image is displayed on the display/input unit of the mobile phone terminal, the master device generates image data of a still image on the basis of the video data of the moving image, and transmits the image data of a still image to the mobile phone terminal, and
   wherein the mobile phone terminal displays a monitoring screen of the still image transmitted from the master device on the display/input unit.
[Embodiment C]
   The monitoring system with the features of Embodiment B,
   wherein, when a display switching instruction to a moving image is received from the mobile phone terminal in a state in which the monitoring screen of the still image is displayed on the display/input unit of the mobile phone terminal, the master device transmits the video data of a moving image to the mobile phone terminal.

## Claims

1. A monitoring system comprising:
a sensor;
a camera, correlated with said sensor, that includes an image capturing unit, and;
a master device that communicates with said camera by using a digital enhanced cordless telecommunication (DECT) method, that connects to a fixed telephone network so as to perform calls to other fixed telephones, and that connects a slave device by using the DECT method;
wherein, when said master device receives sensor detection information from said sensor, said master device transmits the sensor detection information to a mobile phone terminal via a wireless router and transmits an image transmission request to the camera correlated with said sensor, the mobile phone terminal connecting to said master device via the wireless router and connecting to other mobile phone terminals via a mobile phone network;
wherein said camera transmits video data of a moving image obtained by the image capturing unit to said master device in response to the image transmission request from said master device;
wherein said master device transmits the video data of a moving image from said camera to the mobile phone terminal via the wireless router.

2. The monitoring system of claim 1,
wherein, when the master device receives a display switching instruction to a still image from the mobile phone terminal in a state in which the moving image is transmitted to the mobile phone terminal, the master device generates image data of a still image on the basis of the video data of the moving image, and transmits the image data of a still image to the mobile phone terminal.

3. The monitoring system of claim 2,
wherein, when the master device receives a display switching instruction to a moving image from the mobile phone terminal in a state in which the image data of the still image is transmitted to the mobile phone terminal, the master device transmits the video data of a moving image to the mobile phone terminal.

4. The monitoring system of any one of claims 1 to 3, comprising a plurality of sensors and a plurality of cameras,
wherein the master device includes a storage unit, the storage unit including a registration of pairs of a sensor of the plurality of sensors and a camera correlated to said sensor, respectively,
wherein the master device determines a camera correlated with the sensor from which the sensor detection information is received in accordance with the registration stored in the storage unit.

5. The monitoring system of any one of claims 1 to 4, wherein the camera integrally has the sensor correlated with the camera built thereinto.

6. The monitoring system of any of claims 1 to 5, wherein the sensor is one of a human sensor, a smoke sensor and an opening/closing sensor.

7. A method of operating a monitoring system, the monitoring system comprising a sensor, a camera, correlated with said sensor, that includes an image capturing unit, and a master device that communicates with said camera by using a digital enhanced cordless telecommunication (DECT) method, that connects to a fixed telephone network so as to perform calls to other fixed telephones, and that connects a slave device by using the DECT method; the method comprising:
a step of receiving, by said master device, sensor detection information from said sensor,
a step of transmitting, by said master device in response to the receiving of the sensor detection information, the sensor detection information to a mobile phone terminal via a wireless router and an image transmission request to the camera correlated with said sensor, the mobile phone terminal connecting to said master device via the wireless router and connecting to other mobile phone terminals via a mobile phone network;
a step of transmitting, by said camera, of video data of a moving image obtained by the image capturing unit to said master device in response to the image transmission request from said master device; and
a step of transmitting, by said master device, of video data of a moving image from said camera to the mobile phone terminal via the wireless router.
